(19) Europäisches Patentamt
European Patent Office
Office européen des brevets

(11) Publication number : **0 372 658 B1**

# (12) EUROPEAN PATENT SPECIFICATION

(45) Date of publication of patent specification : **07.04.93 Bulletin 93/14**

(51) Int. Cl.[5] : **B01J 19/24,** C01B 3/36, C10J 3/48

(21) Application number : **89203100.6**

(22) Date of filing : **05.12.89**

## (54) Partial oxidation method.

(30) Priority : **05.12.88 GB 8828339**

(43) Date of publication of application : **13.06.90 Bulletin 90/24**

(45) Publication of the grant of the patent : **07.04.93 Bulletin 93/14**

(84) Designated Contracting States : **BE DE ES FR GB IT NL SE**

(56) References cited :
**EP-A- 0 064 089**
**DE-B- 1 091 268**
**FR-A- 2 500 470**
**GB-A- 2 138 841**
**US-A- 3 132 156**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Martens, Franciscus Johanna Arnoldus**
**Badhuisweg 3**
**NL-1031 CM Amsterdam (NL)**
Inventor : **Phillips, Michael Christopher**
**Badhuisweg 3**
**NL-1031 CM Amsterdam (NL)**

EP 0 372 658 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method for carrying out a gasification process in constant volume tubular reactor wherein synthesis gas (carbon monoxide and hydrogen) is obtained by partial oxidation of a hydrocarbon-containing fuel and an oxygen-containing gas.

The oxygen-containing gas used in the partial oxidation may be pure oxygen, mixtures of oxygen and steam, air or mixtures of pure oxygen, air and steam.

In view of the depletion of oil reserves, the production of synthesis gas, which is a feedstock for many chemicals, is a subject of growing interest.

The partial oxidation of hydrocarbon-containing fuels can take place according to various established processes. Gaseous, liquid or solid hydrocarbons or mixtures thereof can be used. Advantageously, methane is used as fuel. More advantageously, the partial oxidation may take place in the presence of steam.

These processes include the Shell Gasification Process. A comprehensive survey of this process can be found in the Oil and Gas Journal, September 6, 1971, pp. 85-90.

The partial oxidation of gaseous fuels is usually carried out at temperatures around 900 to roughly 1600 °C, advantageously 1100 to 1500 °C and pressures up to 100 bar, advantageously 5 to 100 bar.

In a reactor for carrying out these partial oxidation processes the reactants are supplied thereto in any suitable manner through an inlet and the product gas obtained is leaving the reactor through an outlet.

It has now appeared that the performance of such a gasification reactor is strongly dependent on the break-through time of the residence-time-distribution of the reactants in the reactor and not so strongly on the average residence time. The break-through time of a reactor can be defined as the shortest possible residence time of a fluid parcel.

Top-down firing as applied in conventional reactors with a bottom outlet leads to minimal break-through times as a result of fluid short-circuiting.

It is an object of the invention to provide a method wherein the break-through time of the reactants is increased without increasing the volume of the reactor.

The invention therefore provides a method for maximalizationn of the break-through-time of the residence-time-distribution of the reactants in a constant volume reactor applied in a partial oxidation process of a hydrocarbon-containing fuel and an oxygen-containing gas, comprising the steps of supplying the reactants through an inlet of the said reactor and discharging the product gas obtained by the said partial oxidation process through an outlet of the said reactor, characterized in that the break-through-time is in the range of 1.9-2.2 seconds and that the residence-time-distribution is in the range of 0-4.8 seconds$^{-1}$ and further comprising the step of carrying out the said partial oxidation process in a constant volume reactor, wherein the inlet and outlet are both located either at the top or bottom of the reactor and wherein the reactor length (L) over diameter (D) ratio is in the range of $2.8 < \frac{L}{D} < 3.2$.

In this manner the reactor has a maximal break-through time, which is approximately a factor 2 higher than for a reactor of the same volume with bottom outlet. Advantageously, both the inlet and the outlet are located at the top of the reactor.

In another advantageous embodiment of the invention, both the inlet and outlet of the reactor are located at the bottom of the reactor. More advantageously, the reactor length (L) over diameter (D) ratio L/D is equal to 3.

The invention is based upon the fact that the major parameters for the break-through time are the reactor length ($t \sim L^2$) and the momentum (thrust) of the jet ($t \sim (m.v)^{-1/2}$) and that the volumetric averaged reactor residence time is a much less significant parameter. According to the invention, for a given reactor volume, an increase of the break-through time leads to an improvement of the process performance and a maximum break-through time is obtained by specific inlet/outlet position and specific L/D ratios.

The invention will now be described in more detail by way of example by reference to the accompanying drawings, in which:

- fig. 1 represents a break-through-time and residence time distribution of conventional fluid top-feed, bottom-release reactors;
- fig. 2 represents a break-through-time and residence time distribution of fluid top-feed, top-release reactors; and
- fig. 3 represents schematically a top-feed, top-release reactor according to the invention.

Referring now to fig. 1, a break-through time and residence time distribution for conventional reactors (fluid top-feed, bottom-release) is shown. The horizontal axis represents residence time (in seconds) whereas the vertical axis represents residence time distribution (in seconds$^{-1}$).

Distribution a) represents a reactor with a cylindrical outlet, distribution b) represents a reactor with a central outlet hole, and distribution c) represents a reactor with an annular outlet. In all cases the L/D ratio = 5.

Fig. 2 shows the break-through time and residence time distribution for a fluid top-feed, top-release reactor. The horizontal and vertical axes represent the same quantities as in fig. 1.

Distribution d) represents a top-feed, top-release reactor with L/D = 5.0; distribution e) represents a top-feed, top-release reactor of the invention with L/D = 3.0 and distribution f) represents a top-feed, top-release reactor with L/D = 1.8. It appears that the break-through time of distribution e) has considerably increased.

Referring to fig. 3, a longitudinal section of a top-in, top-out reactor has been shown. The release of product gas takes place at the top via a co-annular slot having an inner diameter $D_i$ and an outer diameter D. The inlet has a diameter d (in this example d = 0.22 metres). A series of experiments with several reactors and burners has been carried out in order to demonstrate the invention in comparison with conventional reactors. In these experiments the reactor diameter D varied from 1.0 to 1.4 metres and the reactor length L from 2.50 to 5.00 metres.

Table A shows an example of the dimensions of the reactor as applied in these experiments :

TABLE A

Reactor: fluid top-in, top-out

Considered dimensions:

| | L | D | Di | $(D-D_i)/2$ |
|---|---|---|---|---|
| | 5.00 | 1.00 | 0.83 | 0.085 |
| | 4.16 | 1.10 | 0.93 | 0.085 |
| | 3.75 | 1.15 | 0.97 | 0.090 |
| invention | 3.56 | 1.19 | 0.98 | 0.105 |
| invention | 3.40 | 1.21 | 1.00 | 0.105 |
| | 2.50 | 1.41 | 1.09 | 0.160 |

It appeared, that a reactor with top feeding and top release having L/D ≈ 3 is superior to a conventional top-down fired reactor with bottom outlet. Given the same burner, the same throughput and reactor volume the break-through time is doubled, leading to a much better gasification performance. Or, for twice the capacity, the break-through time is the same, giving similar gasification performance.

Experiments have been carried out with the following jet characteristics (Table B) and reactor and burner characteristics (Table C):

**Table B: Jet characteristics**

**axi-symmetrical round turbulent jet orifice:**

| | | |
|---|---|---|
| mass flow | 5.8 | kg/s |
| velocity | 30. | m/s downward, no swirl |
| momentum | 43.5 | $kg.m/s^2$ (low) |
| fluid density | 5. | $kg/m^3$ |
| equiv. diameter | 0.22 | m |

Table C: Reactor and burner characteristics

| | reactor (prior art) | | | | outlet at BOTTOM | | |
|---|---|---|---|---|---|---|---|
| | length | diameter | volume | length / diameter | inner diameter | outer diameter | reactor-diameter / burner-eq. diam. |
| | (m) | (m) | ($m^3$) | (-) | (m) | (m) | (-) |
| | 5.00 | 1.00 | 3.93 | 5.00 | 0.00 | 1.00 | 4.5 |
| | 5.00 | 1.00 | 3.93 | 5.00 | 0.00 | 0.50 | 4.5 |
| | 5.00 | 1.00 | 3.93 | 5.00 | 0.83 | 1.00 | 4.5 |
| | reactor of table A | | | | outlet at the TOP | | |
| | length | diameter | volume | length / diameter | inner diameter | outer diameter | reactor-diameter / burner-diameter |
| | (m) | (m) | ($m^3$) | (-) | (m) | (m) | (-) |
| | 5.00 | 1.00 | 3.93 | 5.0 | 0.83 | 1.00 | 4.5 |
| (invention) | 3.56 | 1.19 | 3.93 | 3.0 | 0.98 | 1.19 | 5.3 |
| | 2.50 | 1.41 | 3.93 | 1.8 | 1.09 | 1.41 | 6.4 |
| | 4.16 | 1.10 | 3.93 | 3.8 | 0.93 | 1.10 | 4.9 |
| | 3.75 | 1.15 | 3.93 | 3.3 | 0.97 | 1.15 | 5.2 |
| (invention) | 3.40 | 1.21 | 3.93 | 2.8 | 1.00 | 1.21 | 5.5 |

It will be appreciated that the present invention is not restricted to a reactor with a co-annular outlet at the top. Arrangements of outlet ports, or of a single outlet in combination with burner protrusion are also possible. The reactor of the invention has a better volume utilization than a conventional one. Consequently the load can be higher, or the conversion deeper.

The top-feeding of reactants and the top-release of products allows integrated heat-recovery (reactants heating and syngas cooling) within the gasifier vessel. This is in particular advantageous for fuel-air gasification under non-slagging conditions.

Various modifications of the present invention will become apparent to those skilled in the art from the foregoing description and accompanying drawings. Such modifications are intended to fall within the scope of the appended claims.

## Claims

1. A method for maximalization of the break-through-time of the residence-time-distribution of the reactants in a constant volume reactor applied in a partial oxidation process of a hydrocarbon-containing fuel and an oxygen-containing gas, comprising the steps of supplying the reactants through an inlet of the said reactor and discharging the product gas obtained by the said partial oxidation process through an outlet of the said reactor, characterized in that the break-through-time is in the range of 1.9-2.2 seconds and that the residence-time-distribution is in the range of 0-4.8 second$^{-1}$ and further comprising the step of carrying out the said partial oxidation process in a constant volume reactor, wherein the inlet and outlet are both located either at the top or bottom of the reactor and wherein the reactor length (L) over diameter (D) ratio is in the range of $2.8 < \frac{L}{D} < 3.2$.

2. The method as claimed in claim 1 characterized in using a reactor wherein the $\frac{L}{D}$ ratio is equal to 3.

## Patentansprüche

1. Verfahren zum Erreichen der höchstmöglichen Durchbruchzeit in der Verweilzeitverteilung der Reaktanden in einem Reaktor mit konstantem Volumen , der bei einem partiellen Oxidationsverfahren eines kohlenwasserstoffhaltigen Brennstoffes und eines sauerstoffhaltigen Gases eingesetzt wird, das die Stufen des Zuführens der Reaktanden durch einen Einlaß des genannten Reaktors und des Auslassens des durch das genannte partielle Oxidationsverfahren erhaltenen Produktgases durch einen Auslaß des genannten Reaktors umfaßt, dadurch gekennzeichnet, daß die Durchbruchzeit im Bereich von 1,9 bis 2,2 Sekunden liegt und daß die Verweilzeitverteilung im Bereich von 0 bis 4,8 Sekunden$^{-1}$ liegt, ferner umfassend die Stufe der Durchführung des genannten partiellen Oxidationsverfahrens in einem Reaktor mit konstantem Volumen , wobei der Einlaß und der Auslaß beide jeweils entweder am Kopf oder am Boden des Reaktors angeordnet sind und wobei das Verhältnis der Länge (L) des Reaktors zum Durchmesser (D) im Bereich von $2{,}8 < \frac{L}{D} < 3{,}2$ liegt.

2. Das Verfahren wie in Anspruch 1 beansprucht, gekennzeichnet durch die Verwendung eines Reaktors, in welchem das Verhältnis L/D gleich 3 ist.

## Revendications

1. Une méthode pour rendre maximale la période de transition de la distribution du temps de séjour des réactifs dans un réacteur à volume constant appliqué à un procédé d'oxydation partielle d'un combustible renfermant des hydrocarbures et d'un gaz renfermant de l'oxygène, méthode comportant les étapes d'alimenter en réactifs par une ouverture d'entrée dudit réacteur et d'évacuer le produit gazeux obtenu par ledit procédé d'oxydation partielle par une ouverture de sortie dudit réacteur, caractérisée en ce que le temps de transition se situe dans la gamme de 1,9 à 2,2 secondes et que la distribution du temps de séjour se situe dans la gamme de 0 à 4,8 s$^{-1}$, et comportant en outre l'étape de mettre en oeuvre ledit procédé d'oxydation partielle dans un réacteur à volume constant, dans lequel l'ouverture d'entrée et l'ouverture de sortie sont à la fois disposées au niveau soit de la zone supérieure, soit de la zone inférieure du réacteur et dans lequel le rapport entre la longueur du réacteur (L) au diamètre (D) dudit réacteur se situe dans la gamme de $2{,}8 < \frac{L}{D} < 3{,}2$

2. La méthode telle que revendiquée dans la revendication 1, caractérisée en ce que l'on utilise un réacteur dans lequel le rapport L/D est égal à 3.

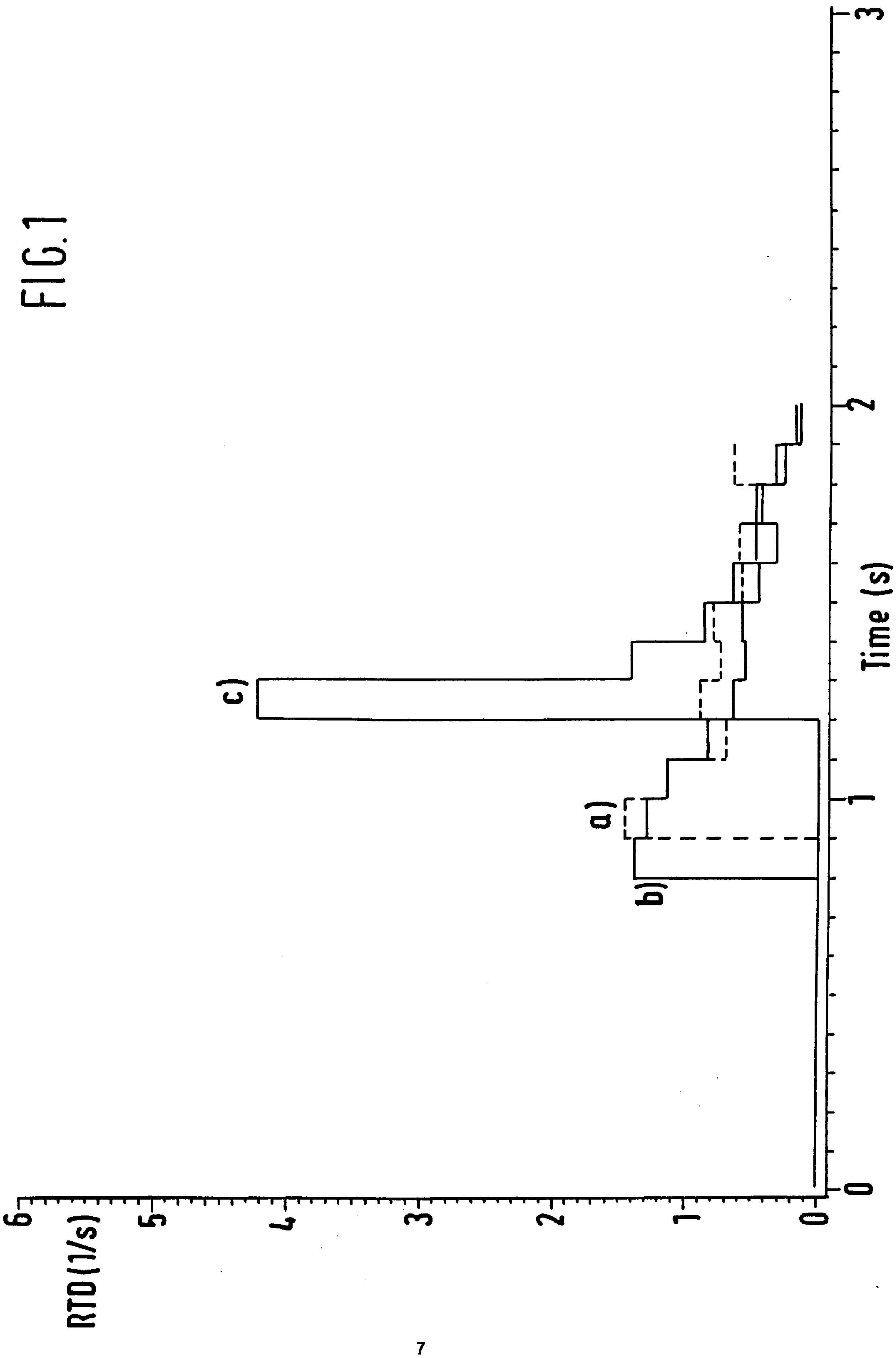


FIG. 1

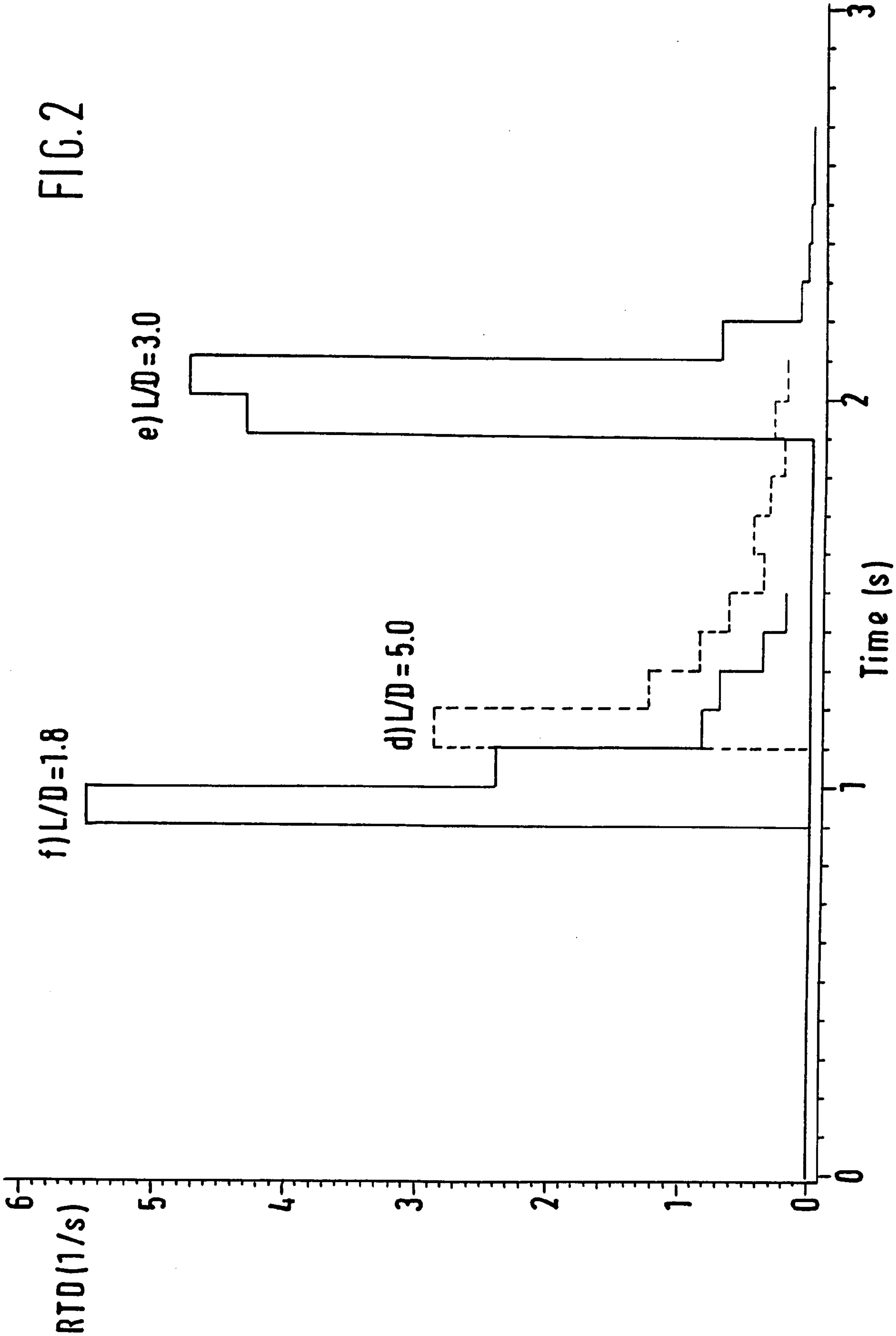


FIG. 2

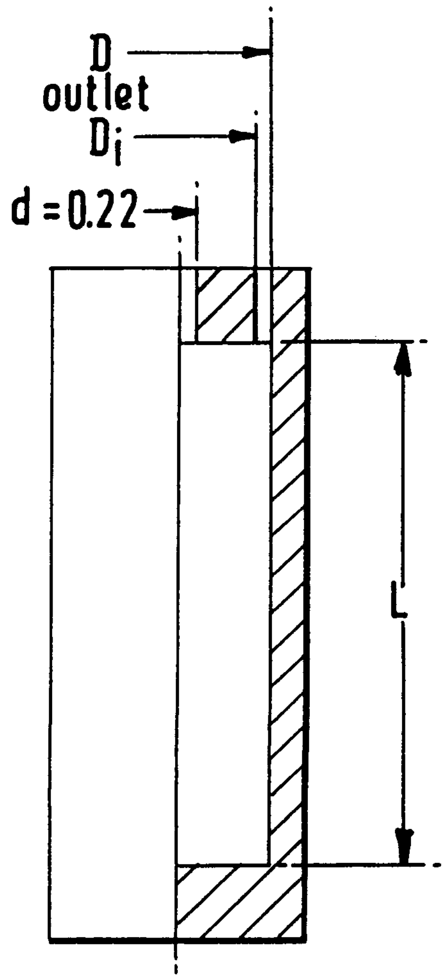


FIG.3